# FASCICULE DE BREVET EUROPEEN

(11) **EP 0 247 907 B1**
(45) Date de publication et mention de la délivrance du brevet: **15.09.1993**
(21) Numéro de dépôt: 87400663.8
(22) Date de dépôt: 25.03.1987
(51) Int. Cl.: C01B 21/06, C01B 31/30, C01B 31/36, C01B 21/068, C01B 21/072, C01B 21/076, C01B 21/064, C04B 35/58, C04B 35/56

(54) **Poudres pour céramiques en carbures et nitrures métalliques par réduction carbothermique et leur procédé de fabrication**
Metallcarbid- und -nitridpulver für Keramiken durch karbothermische Reduktion und Verfahren zu deren Herstellung
Metal carbide and nitride powders for ceramics obtained by carbothermal reduction, and process for their manufacture

(30) Priorité: 03.04.1986 FR 8604765
(43) Date de publication de la demande: 02.12.1987
(73) Titulaire: ELF ATOCHEM S.A., 92800 Puteaux (FR)
(72) Inventeur: Bachelard, Roland, F-69007 Lyon (FR); Joubert, Philippe, F-69005 Lyon (FR)
(74) Mandataire: Rochet, Michel

(56) Documents cités:
- FR-A- 1 460 778
- GB-A- 1 028 977
- US-A- 4 529 575
- US-A- 4 626 422
- JOURNAL OF THE AMERICAN CERAMIC SOC., vol 67, no. 10, octobre 1984, pages 691-695, Columbus, Ohio, US; S-C. ZHANG et al.: "Preparation of silicon nitride from silica"
- CHEMICAL ABSTRACTS, vol. 103, no. 2, 15 juillet 1985, page 128, abrégé no. 8508n, Columbus, Ohio, US; & JP-A-85 54 910 (CENTRAL GLASS CO. LTD) 29-03-1985

## Description

L'invention a pour objet des poudres de nitrures et carbures métalliques utilisables notamment pour la fabrication des céramiques, lesdites poudres étant obtenues par la voie dite réduction carbothermique d'oxydes métalliques. L'invention concerne également un procédé de fabrication de telles poudres.

On connaît divers procédés de fabrication de carbures et nitrures pour céramiques. Indépendamment des procédés de laboratoire tel que le procédé faisant appel à des réactions induites par laser ou par plasma, la littérature décrit essentiellement trois voies d'accès, notamment aux nitrures et carbures de silicium, à savoir la réaction en phase gaz, à partir d'halogénosilane et de méthane ou d'ammoniac, la carburation ou nitruration directe, à partir de silicium et de carbone ou d'azote et la réduction carbothermique en présence d'atmosphère neutre ou azotée, à partir de silice et de carbone (F.K Van Dijen, R Metselaar & C.A.M. Siskens. SPECHSAAL Vol. 117 n^{o} 7, 1984 pages 627-9). A la différence des techniques laser ou plasma, mentionnées plus haut et qui peuvent conduire à des carbures ou nitrures de grande surface spécifique, c'est-à-dire pouvant atteindre ou dépasser 100 ou 150 m²/g (voir par exemple Y. KIZAKI, T. KANDORI et Y. FUJITANI dans Japanese Journal of Applied Physics Vol. 24, n^{o} 7, Juillet 1985, pp 800-805 ou Y. SUYAMA, Robert M. MARRA, John S. HAGGERTY et H. KENT BOWEN dans Am. Ceram. Soc. Bull. 64 (10) 1356-59 1985), la voie de la réduction carbothermique conduit à des poudres de faible surface spécifique, c'est-à-dire inférieure à 20 m²/g. (Voir par exemple F.K Van Dijen et al, op. cit. page 628 qui présentent la valeur de 10-15 m²/g comme la valeur maximum qu'on puisse attendre d'une réaction optimisée ; David L. SEGAL dans Chemistry & Industry, 19 August 1985, pp 544-545 qui donne la valeur de 5 m²/g ; Shi Chang ZHANG et W. ROGER CANNON dans Journal of American Ceramic Society, Vol. 67 n^{o} 10, pp 691-5 qui indiquent 10,3 m²/g).

Dans le brevet américain 4.529.575 se trouvent décrits trois procédés de préparation de poudres ultrafines de carbure de silicium, à partir de carbone, d'un liant carboné et de silice. Selon cette référence, on utilise du carbone de grande surface spécifique nécessairement mélangé avec un liquide organique (hydrocarbure, ester, éther, cétone - premier procédé - ou avec de l'eau contenant un agent tensio-actif - deuxième procédé -, ou encore des particules de carbone chauffées en atmosphère oxydante - troisième procédé. Dans chacun de ces procédés, on utilise une silice de granulométrie comprise entre 20 et 170 µm (col. 4, lignes 51-52) et on peut obtenir du carbure de silicium dont la surface spécifique peut aller de 14,3 à 38,7 m²/g (tableau 2, col. 13-14).

L'invention propose une nouvelle famille de poudres de carbures et nitrures par la voie de la réduction carbothermique et, le cas échéant, de nitruration, ces poudres présentant une grande surface spécifique.

L'invention concerne également un procédé de fabrication de telles poudres et les moyens spécifiques mis en oeuvre dans ce procédé.

L'invention a encore pour objet les céramiques obtenues à partir des poudres conformes à l'invention.

Ces nouvelles poudres sont constituées par des carbures à l'exception de carbures de silicium et des nitrures métalliques et sont caractérisées en ce qu'elles présentent une surface spécifique comprise entre 30 et 250 m²/g.

L'invention concerne tout spécialement de telles poudres, se présentant sous forme d'agglomérats de dimensions moyennes inférieures à 5 µm et constituées de particules élémentaires dont les dimensions moyennes sont comprises entre 10 et 50 nm.

L'invention concerne spécifiquement les poudres dont au moins 30 % présentent une structure cristallisée.

Au sens de l'invention, la surface spécifique est mesurée par application de la méthode B.E.T. d'après BRUNAUER, EMMETT & TELLER, J.A.C.S., 60, 309, 1938.

De même la structure cristallisée est appréciée par diffraction des rayons X selon la méthode décrite par C.P. GAZZARA & D.R. MESSIER dans Bull Am. Ceram. Soc. 56, 777-80, 1977.

L'invention concerne tout particulièrement les poudres de carbures et nitrures des métaux choisis dans le groupe consititué par le silicium, l'aluminium, le titane, le zirconium, le hafnium, le bore à l'exception du carbure (3) de silicium. Elle concerne plus spécifiquement les poudres de nitrure de silicium et de nitrure d'aluminium.

L'invention a également pour objet un procédé depréparation des poudres précitées, et plus précisémment un procédé de fabrication de poudres de surface spécifique élevée et contrôlée, ledit procédé comprenant les étapes suivantes :
a) A partir de l'oxyde ou des oxydes métalliques de granulométrie inférieure à 10 µm, d'un liant générant du carbone dans les conditions de la réaction de réduction carbothermique et, le cas échéant, de carbone, fabrication de granulés à volume poreux contrôlé.
b) Réaction de réduction carbothermique des granulés obtenus sous a, le cas échéant en présence d'une atmosphère contenant de l'azote.
c) Décarburation.
d) Obtention de poudres.

L'étape a consiste à former des granulés à volume poreux contrôlé. Dans cette opération on met en oeuvre un ou plusieurs oxydes métalliques et un ou plusieurs composés ou éléments apportant du carbone et remplissant une fonction de liant.

L'oxyde métallique pourra notamment être choisi dans le groupe constitué par SiO₂, Al₂O₃, TiO₂, ZrO₂, HfO₂, etB₂O₃.

D'une manière générale, la granulométrie de l'oxyde métallique est inférieure à 10 µm et plus précisémment de l'ordre de 0,1 à 5 µm.

On peut dans le procédé conforme à l'invention mettre en oeuvre soit d'une part du carbone et d'autre part un liant, soit un liant susceptible d'assurer l'apport de carbone nécessaire à la réaction.

Lorsqu'on utilise à la fois du carbone et un liant, le carbone peut être choisi parmi les différentes variétés de carbone, et notamment le carbone végétal, le noir thermique, le noir d'acétylène, le coke, le noir de fumée, le graphite. D'une manière générale la granulométrie du carbone est inférieure à 10 µm et plus précisémment de l'ordre de 0,1 à 5 µm.

Le liant, utilisé seul ou associé au carbone, peut être choisi dans une très grande famille de substances naturelles ou synthétiques se transformant en carbone au plus tard lors de la réaction de réduction carbothermique et susceptibles de favoriser l'agglomération des oxydes et, le cas échéant, du carbone en vue de former les granulés. Parmi les produits répondant à cette définition, on citera les goudrons de houille, des résines ou polymères, notamment thermodurcissables tels que les résines phénoliques, par exemple phénolformol, les résines époxy, les polyimides, les polyurées, les polycarbonates.

D'une manière générale, le liant au sens donné ci-avant seul ou associé au carbone est utilisé en quantité telle que le rapport molaire 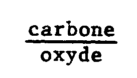
soit supérieur à 1 et de préférence compris entre 2 et 60/1. Lorsqu'on utilise à la fois du carbone et un liant, la quantité de liant représente au moins 2 % du poids du mélange oxyde + carbone.

L'oxyde ou les oxydes, le liant et éventuellement le carbone subissent une opération de mélangeage et malaxage. L'opération peut être effectuée dans une large gamme de température, pouvant aller par exemple de la température ambiante à 200°C, le choix de la température étant, entre autre, conditionné par la mise en oeuvre du liant.

A la suite de cette opération, la pâte formée est avant nt mise en forme, notamment par extrusion, les particules obtenues, par exemple après découpage ou broyage du jonc formé par l'extrudeuse, étant avantageusement portées à une température permettant d'obtenir le séchage et/ou le durcissement et/ou la polymérisation du liant, température pouvant se situer entre 50 et 250°C par exemple, lesdites particules pouvant ensuite être agglomérées sous forme de granulés. Dans le procédé conforme à l'invention, on peut, par action sur la quantité du liant mis en oeuvre et/ou par action sur les conditions de température et/ou de pression (par exemple entre 2 et 200 bars) lors de la confection des granulés régler de manière précise le volume poreux des granulés ultérieurement soumis à la réduction carbothermique.

Selon une variante, le liant peut être cokéfié, par exemple entre 350 et 500°C avant la réaction de réduction carbothermique.

Ces granulés à volume poreux contrôlé, et plus précisémment de tels granulés, comprenant un mélange aggloméré d'oxyde(s) métallique(s), de liant générant de carbone comme défini précédemment et, le cas échéant, le carbone complémentaire ou le liant cokefié, présentent généralement un volume poreux dont la valeur peut être choisie entre 0,1 et 3 cm³/g (mesure effectuée au porosimètre à mercure dans la zone 0 à 2000 bars).

Ces granulés peuvent se présenter sous forme de pastilles, de cylindres ou plus généralement de particules à forme régulière ou irrégulière. D'une manière générale, la plus grande dimension de ces granulés est supérieure à 0,5 mm et de préférence comprise entre 1 et 30 mm, ces valeurs n'étant données qu'à titre indicatif. De tels granulés ainsi définis constituent, à titre de moyen spécifique de procédé de fabrication des poudres ultrafines conformes à l'invention, un autre objet de ladite invention.

Dans l'étape b du procédé, le ou les oxydes, le liant et, le cas échéant le carbone, mélangés et agglomérés sous forme de granulés selon a ci-avant sont soumis à une réaction de réduction carbothermique. D'une manière générale, cette opération peut s'effectuer à une température pouvant être comprise entre 1.300 et 1.600°C. Cette réaction s'effectue en présence d'une atmosphère contenant de l'azote ou libérant de l'azote dans les conditions de la réaction lorsqu'on entend fabriquer des nitrures ou dans une atmosphère neutre dans les conditions de la réaction dans le cas des carbures. Dans cette seconde hypothèse, on pourra utiliser une atmosphère d'hydrogène ou d'un gaz rare tel que l'argon. Dans le cas particulier d'une atmosphère participant à la réaction (azote) on utilise avantageusement un excès d'azote pouvant aller de 2 à 10 fois la stoechiométrie de la réaction, valeurs devant être considérées comme constituant un ordre de grandeur. La réaction de réduction carbothermique libérant de l'oxygène (sous forme de CO notamment), la poursuite de la réaction jusqu'à transformation de la totalité de l'oxyde métallique pourra être suivie par contrôle de l'émission de CO.

L'étape c est une opération de décarburation, dans le but d'éliminer l'excès de carbone apporté par le liant et, éventuellement, directement sous forme de carbone. Cette opération peut être avantageusement effectuée à une température comprise entre 500 et 800°C. Elle sera de préférence poursuivie jusqu'à consommation de la totalité du carbone, ladite consommation pouvant être suivie par contrôle de l'émission de gaz de combustion, c'est-à-dire CO et CO₂.

A l'issue de l'opération de décarburation, on recueille (étape d) les carbures ou nitrures conformes à l'invention, c'est-à-dire sous forme de particules ou d'agglomérats de particules présentant une exceptionnelle surface spécifique. On peut, le cas échéant, procéder à une opération de désagglomération ou plus précisémment d'uniformisation des dimensions moyennes des agglomérats, par exemple par broyage et tamisage.

Ainsi qu'il a été précisé , les poudres de carbures et nitrures conformes à l'invention constituent une nouvelle famille de poudres de carbures et nitrures par la voie de réduction carbothermique et, éventuellement nitruration, dans la mesure où de telles poudres présentent une surface spécifique, accessible de manière reproductible, sans commune mesure avec les surfaces spécifiques des poudres par réduction carbothermique décrites à ce jour. Ces nouvelles poudres constituent des matériaux de choix pour la fabrication de céramiques, leurs propriétés permettant notamment un frittage aisé et l'obtention de pièces frittées à grande densité.

Les exemples suivants donnés à titre purement indicatif, illustrent l'invention.

### EXEMPLE 1

Dans un malaxeur, on mélange 115 g d'une poudre de silice dont les caractéristiques sont les suivantes :
- Aire spécifique : 180 m².g⁻¹
- Diamètre médian : 2 µm
- Perte au feu : 11,46 %
- Teneur en Si : 40,53 %
avec 300 g de noir de carbone ex-acétylène dont les caractéristiques sont :
- Aire spécifique : 64 m².g⁻¹
- Diamètre médian : < 3 µm
- Pureté : > 99 %

Le malaxeur est pourvu d'une enveloppe chauffante dans laquelle on fait circuler un caloporteur porté vers 80°C. Dans le but d'obtenir une masse extrudable, on additionne progressivement au mélange des poudres maintenues en mouvement, 660 g de goudron de pin. Lorsque la pâte ainsi constituée présente un aspect homogène et une rhéologie stable, elle est extrudée sous forme de joncs de 5 mm de diamètre dans un appareil qui permet d'appliquer une pression d'environ 80 bars.

Ces extrudats sont tout d'abord séchés progressivement à l'air entre la température ambiante et 200°C. Puis lorsqu'ils ont acquis une consistance solide, ils sont cokéfiés par traitement thermique à 400°C dans un courant d'azote. A l'issue de ces opérations de séchage-cokéfaction, la perte de masse est de 46,6 %.

398 g de ces extrudats durs sont ensuite soumis à une réduction carbothermique en atmosphere d'azote. Pour celà, les extrudats dont le volume poreux est de 0,73 cm³.g⁻¹, sont placés dans un réacteur cylindrique parcouru par un courant d'azote d'un débit de 0,300 m³.h⁻¹. Un programme d'élévation de température est appliqué qui permet de porter la charge à la température de 1.400°C en 1 h 30 mn. Cette température est maintenue pendant 5 heures puis le chauffage est coupé et on laisse le produit se refroidir sous balayage d'azote. On constate alors que le produit se présente toujours sous la forme de granulés noirs offrant une bonne tenue mécanique. On en recueille 314 g.

Ces extrudats sont portés à une température progressivement élevée à 700°C sous courant d'air et maintenus à cette température pendant 15 heures. Après refroidissement, on recueille 48 g d'une poudre légèrement beige et dont l'analyse par diffraction des rayons X révèle qu'elle ne contient pas de quantité décelable de silice cristallisée (quartz ou cristoballite) pas plus que de carbone résiduaire.

En revanche, on détecte la présence des 2 variétés cristallisées du nitrure de silicium ainsi qu'une phase amorphe. Une estimation des teneurs respectives en ces divers constituants a été éffectuée selon la méthode décrite par C.P. GAZZARA et D.R. MESSIER, Bull. Am.Ceram.Soc. 56, 777-80, 1977.

On trouve :
Si₃N₄ amorphe ∼ 20 %
α Si₃N₄ ∼ 45 %
β Si₃N₄ ∼ 35 %
La surface spécifique de cette poudre déterminée selon la méthode BET est de 88,8 m².g⁻¹.

### EXEMPLE 2

Dans un malaxeur à deux bras, similaire à celui utilisé dans l'exemple 1, on mélange 150 g de silice avec 400 g de noir de carbone ex-acétylène (produits de l'exemple 1). Puis on ajoute progressivement une solution aqueuse de résine phénolique (marque Fen-O-Fen) : 126 g de résine pure et 24 g de catalyseur de polyméri sont ainsi incorporés au mélange afin de lui conférer la consistance adéquate. Le fond de la cuve de malaxage comporte une vis d'extrusion avec laquelle la pâte est filée sous forme d'extrudats de 6 mm de diamètre.

Ceux-ci sont alors séchés à 150°C dans une étuve à vide. Au cours de ce traitement, la résine polymérise et les extrudats durcissent. Leur volume poreux déterminé par porosimétrie au mercure est de 1,46 cm³.g⁻¹.

Ils sont ensuite réimprégnés par la même résine phénolique sous la forme d'une solution méthanolique à 20 % en poids de polymère. On en incorpore de la sorte 30,9 % du poids des granulés mesuré après séchage à l'étuve. Le volume poreux des granulés séché à 120°C est ainsi ramené à 0,97 cm³.g⁻¹. Une aliquote de 10 g de ces extrudats est placée dans un réacteur vertical parcouru par un courant d'azote dont le débit est d'environ 20 litres par heure.

Les granulés sont alors portés à 1.400°C en 2 heures et 10 mn, puis maintenus pendant 5 heures à cette température. Après refroidissement, 7,97 g de produit, toujours sous la forme de granulés, sont recueillis.

L'excès de carbone est ensuite éliminé par combustion dans l'air. L'opération est réalisée comme dans l'exemple 1. Le résidu final pèse 1,22 g.

L'analyse qui en est faite par diffraction des rayons X révèle que la totalité de la silice a été attaquée, que le carbone a été entièrement éliminé et qu'il ne s'est pas formé d'oxynitrure Si₂N₂O.

En appliquant la méthode décrite précédemment, on dose :
- 55 % de α Si₃N₄.
- 15 % de β Si₃N₄.
- 30 % de Si₃N₄ amorphe.

Le nitrure de silicium ainsi préparé présente une surface spécifique de 59 m².g⁻¹.

### EXEMPLE 3

On opère comme dans l'exemple 2. Mais la teneur en résine phénolique introduite par imprégnations successives avec la solution méthanolique est portée à 104 % de la masse des granulés initiaux. Le volume poreux des granulés est de 0,48 cm³.g⁻¹. Une aliquote de 10 g est soumise à la réduction carbothermique dans les mêmes conditions que dans l'exemple 2. Le produit de réaction pèse 6,46 g. Il contient un important excès de carbone qui est éliminé par combustion selon la même procédure que précédemment. Le résidu final pèse 0,74 g.

L'analyse de phases permet de constater que la silice a été entièrement attaquée et que le carbone a complètement disparu. Les seules phases cristallisées détectables sont les variétés α et β de Si₃N₄ ; elles sont accompagnées d'une partie amorphe majoritaire. On dose en effet environ 40 % de α Si₃N₄ et 10 % de β Si₃N₄. L'aire spécifique de ce nitrure de silicium est de 92 m².g⁻¹.

### EXEMPLE 4

L'oxyde métallique est de l'alumine gamma présentant les caractéristiques suivantes :
- Aire spécifique ∼ 100 m².g⁻¹
- Diamètre médian : < 4 µm
- Perte au feu : 6,9 %
- Pureté : > 99,95 %

85 g de ce produit sont mélangés à 300 g de noir de carbonne ex-acétylène de l'exemple 1. L'omogénéisation est réalisée dans un malaxeur chauffant. Lorsque le mélange paraît homogène, on incorpore progressivement 660 g de goudron de pin pour transformer la charge en une pâte extrudable. L'extrusion se déroule à 80°C et le produit se retrouve sous la forme de filets de 5 mm de diamètre.

Ceux-ci sont ensuite séchés à 150°C pendant 2 heures. La perte de masse au cours de cette opération s'élève à 22 %. Les extrudats consolidés sont repris pour être cokéfiés sous balayage d'azote. Pour celà sont portés à 450°C et maintenus pendant 25 mm à cette température ce qui entraîne une perte supplémentaire de 27 % de la masse séchée. Le volume poreux est de 0,23 cm³.g⁻¹.

580 g de ces extrudats séchés et cokéfiés sont ensuite soumis à l'opération de carbonitruration dans les conditions de l'exemple 1. L'opération a à la même température de 1.400°C à laquelle les extrudats sont maintenus pendant 4 heures, le four étant parcouru par un débit d'azote de 0,300 m³.h⁻¹.

Après refroidissement, on recueille 480,2 g de granulés noirs qui contiennent notamment le carbone en excès engagé dans la réaction.

Ces granulés sont broyés dans un broyeur à couteau. La poudre recueillie est placée dans un réacteur cylindrique rotatif.

Après une purge à l'azote de l'enceinte, la poudre est portée à 500°C et de l'air est admis dans le four dont on contrôle la teneur en oxygène des gaz effluents. Le débit d'air est modulé de manière à ce que le titre de l'oxygène à la sortie ne dépasse pas 2 % en volume. Vers la fin de l'opération la température est élevée jusqu'à 650°C afin d'achever la combustion de carbone résiduaire. On recueille finalement 67,2 g de poudre de couleur gris-beige.

L'analyse de phases effectuée par diffraction des rayons X révèle l'absence totale d'alumine et de carbone. La seule phase cristallisée détectée est AlN (52 %) accompagné d'une phase amorphe.

La surface spécifique de ce nitrure d'aluminium est de 34 m².g⁻¹.

### EXEMPLE 5

Dans un malaxeur, on réalise le mélange de 85 g d'alumine gamma identique à celle décrite dans l'exemple 4, avec 300 g de noir de carbone ex-acétylène de l'exemple 1 et 1,5 l d'une solution aqueuse contenant 125 g de résine phénolique Fen-O-Fen et 25 g de catalyseur de polymérisation.

Cette charge est extrudée sous la forme de filets de 6 mm de diamètre.

Ceux-ci sont tout d'abord séchés à 130°C dans une étuve à vide.

Après cette consolidation, les extrudats sont imprégnés par une solution méthanolique de résine identique à celle mise en oeuvre dans l'exemple 2. En renouvellant cette opération, on parvient à incorporer 64 % de résine en plus de la masse totale des extrudats.

Les granulés dont le volume poreux est de 1,0 cm³.g⁻¹, subissent alors la réduction carbothermique dans les conditions de l'exemple 4. Il s'ensuit une perte de masse de 29 %.

De même, ils sont ensuite décarburés selon la procédure mise en oeuvre dans l'exemple 4. Le carbone excédentaire éliminé représente 87,45 % de la masse totale avant traitement. On recueille finalement une poudre dans laquelle l'alumine et le carbone sont absents. Ce produit final est constitué de nitrure d'aluminium dont l'aire spécifique est de 76 m².g⁻¹, la phase cristallisée représentant 35 %.

## Revendications

1. Poudres de nitrures et carbures à l'exception du carbure de silicium par voie de réduction carbothermique et, le cas échéant, nitruration d'oxydes métalliques utilisables notamment pour la fabrication de céramiques caractérisées en ce qu'elles présentent une surface spécifique comprise entre 30 et 250 m²/g.

2. Poudres selon la revendication 1 caractérisées en ce qu'elles se présentent sous forme d'agglomérats de dimensions moyennes inférieures à 5 µm et constituées de particules élémentaires dont les dimensions moyennes sont comprises entre 10 et 50 nm.

3. Poudres selon l'une quelconque des revendications 1 ou 2, caractérisées en ce qu'au moins 30 % desdites poudres présentent une structure cristallisée.

4. Poudres selon l'une des revendications 1 à 3, caractérisées en ce qu'elles sont choisies parmi les poudres de carbures et nitrures des métaux choisis dans le groupe constitué par le silicium, l'aluminium, le titane, le zirconium, le hafnium, le bore.

5. Poudres selon l'une des revendications 1 à 4, caractérisées en ce qu'elles sont choisies dans le groupe constitué par les nitrures de silicium et les nitrures d'aluminium.

6. Procédé de fabrication des poudres selon l'une des revendications 1 à 5, caractérisé en ce qu'il comprend les étapes suivantes :
a) A partir de l'oxyde ou des oxydes métalliques de granulométrie inférieure à 10 µm, d'un liant générant du carbone, au plus tard lors de la réaction de réduction carbothermique et, le cas échéant, de carbone complémentaire, fabrication de granulés à volume poreux contrôlé.
b) Réaction de réduction carbothermique des granulés obtenus sous a, le cas échéant en présence d'une atmosphère contenant de l'azote.
c) Décarburation.
d) Obtention de poudres.

7. Procédé selon la revendication 6, caractérisé en ce que l'oxyde ou les oxydes métalliques est (sont) choisi(s) dans le groupe constitué par SiO₂, Al₂O₃, TiO₂, ZrO₂, HfO₂, etB₂O₃.

8. Procédé selon la revendication 6, caractérisé en ce qu'on met en oeuvre à la fois du carbone et un liant.

9. Procédé selon la revendication 8, caractérisé en ce que le carbone est choisi dans le groupe constitué par le carbone végétal, le noir thermique, le noir d'acétylène, le coke, le noir de fumée, le graphite.

10. Procédé selon la revendication 6, caractérisé en ce qu'on ne met en oeuvre qu'un liant générant du carbone.

11. Procédé selon l'une quelconque des revendications 6 à 10, caractérisé en ce que le liant est choisi parmi les substances naturelles ou synthétiques se transformant en carbone dans les conditions de la réaction de réduction carbothermique et susceptibles de favoriser l'agglomération des oxydes.

12. Procédé selon la revendication 11, caractérisé en ce que le liant est choisi dans le groupe constitué par les goudrons de houille, les résines ou polymères, notamment thermodurcissables tels que les résines phénoliques, par exemple phénolformol, les résines époxy, les polyimides, les polyurées, les polycarbonates.

13. Procédé selon l'une quelconque des revendications 6 à 12, caractérisé en ce que le liant additionné, le cas échéant, de carbone, est utilisé en quantité telle que le rapport molaire 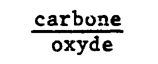 soit supérieur à 1 et de préférence compris entre 2 et 60/1.

14. Procédé selon l'une quelconque des revendications 8 et 9, caractérisé en ce que la quantité de liant représente au moins 2 % du poids du mélange oxyde + carbone.

15. A titre de moyen spécifique pour la mise en oeuvre du procédé selon la revendication 6, des granulés constitués par un mélange aggloméré d'oxyde(s) métalliques(s), de liant générant du carbone et, le cas échéant, de carbone, lesdits granulés présentant un volume poreux dont la valeur est choisie entre 0,1 et 3 cm³/g.

16. Granulés selon la revendication 15, caractérisés en ce qu'ils se présentent sous forme de pastilles, cylindres ou particules à forme régulière ou irrégulière dont la plus grande dimension est supérieure à 0,5 mm.

17. Granulés selon l'une quelconque des revendications 15 ou 16, caractérisés en ce que leur plus grande dimension est comprise entre 1 et 30 mm.

18. Application des poudres selon l'une quelconque des revendications 1 à 5 à la fabrication de céramiques.

## Claims

1. Nitride and carbide powders with the exception of silicon carbide by a carbothermal reduction route and, if appropriate, nitriding of metal oxides, usable especially for the manufacture of ceramics, characterised in that they have a specific surface of between 30 and 250 m²/g.

2. Powders according to Claim 1, characterised in that they are in the form of agglomerates of average dimensions smaller than 5 µm and consisting of elementary particles whose average dimensions are between 10 and 50 nm.

3. Powders according to either of Claims 1 and 2, characterised in that it least 30 % of the said powders have a crystallised structure.

4. Powders according to one of Claims 1 to 3, characterised in that they are chosen from powdered carbides and nitrides of metals chosen from the group consisting of silicon, aluminium, titanium, zirconium, hafnium and boron.

5. Powders according to one of Claims 1 to 4, characterised in that they are chosen from the group consisting of silicon nitrides and aluminium nitrides.

6. Process for the manufacture of the powders according to one of Claims 1 to 5, characterised in that it comprises the following stages:
a) manufacture of granulates with a controlled pore volume from the metal oxide or oxides of particle size smaller than 10 µm, from a binder generating carbon, not later than during the carbothermal reduction reaction and, if appropriate, additional carbon.
b) Carbothermal reduction reaction of the granulates obtained under a, if appropriate in the presence of an atmosphere containing nitrogen.
c) Decarbonisation.
d) Obtaining powders.

7. Process according to Claim 6, characterised in that the metal oxide or oxides is (are) chosen from the group consisting of SiO₂, Al₂O₃, TiO₂, ZrO₂, HfO₂ and B₂O₃.

8. Process according to Claim 6, characterised in that carbon and a binder are used at the same time.

9. Process according to Claim 8, characterised in that the carbon is chosen from the group consisting of vegetable black, thermal black, acetylene black, coke, channel black and graphite.

10. Process according to Claim 6, characterised in that only a binder generating carbon is used.

11. Process according to any one of Claims 6 to 10, characterised in that the binder is chosen from natural or synthetic substances which are converted into carbon under the conditions of the carbothermal reduction reaction and are capable of promoting the agglomeration of the oxides.

12. Process according to Claim 11, characterised in that the binder is chosen from the group consisting of coal tars, resins or polymers, especially heat-curable ones such as phenolic resins, for example phenol-formaldehyde, epoxy resins, polyimides, polyureas and polycarbonates.

13. Process according to any one of Claims 6 to 12, characterised in that the binder, to which carbon is added if appropriate, is employed in a quantity such that the carbon/oxide molar ratio is higher than 1 and preferably between 2 and 60/1.

14. Process according to either of Claims 8 and 9, characterised in that the quantity of hinder represents at least 2 % of the weight of the mixture of oxide + carbon.

15. As specific means for implementing the process according to Claim 6, granulates consisting of an agglomerate mixture of metal oxide(s), of binder generating carbon and, if appropriate, of carbon, the said granulates having a pore volume whose value is chosen between 0.1 and 3 cm³/g.

16. Granulates according to Claim 15, characterised in that they are in the form of tablets, cylinders or particles of regular or irregular shape whose largest dimension is greater than 0.5 mm.

17. Granulates according to either of Claims 15 and 16, characterised in that their largest dimension is between 1 and 30 mm.

18. Application of the powders according to any one of Claims 1 to 5 to the manufacture of ceramics.

## Patentansprüche

1. Pulver von Nitriden und Carbiden, außer Siliciumcarbid, hergestellt über carbothermische Reduktion und gegebenenfalls über Nitridierung von Metalloxiden, die besonders zur Herstellung von keramischen Materialien verwendet werden, dadurch gekennzeichnet, daß sie eine spezifische Oberfläche zwischen 30 und 250 m²/g aufweisen.

2. Pulver nach Anspruch 1, dadurch gekennzeichnet, daß sie Agglomerate mit einer mittleren Größe kleiner als 5 µm formen und aus kleinsten Partikeln mit einer mittleren Größe zwischen 10 und 50 nm aufgebaut sind.

3. Pulver nach irgendeinem der Ansprüche 1 oder 2, dadurch gekennzeichnet, daß mindestens 30 % des genannten Pulvers eine kristalline Struktur aufweist.

4. Pulver nach einem der Ansprüche 1 bis 3, dadurch gekennzeichnet, daß sie unter pulverigen Carbiden und Nitriden von Metallen ausgewählt werden, die Bestandteil der Menge aus Silicium, Aluminium, Titan, Zirkon, Hafnium, Bor sind.

5. Pulver nach einem der Ansprüche 1 bis 4, dadurch gekennzeichnet, daß sie aus der Menge ausgewählt werden, die durch die Siliciumnitride und die Aluminiumnitride gebildet wird.

6. Verfahren zur Herstellung von Pulvern nach einem der Ansprüche 1 bis 5, dadurch gekennzeichnet, daß es die folgenden Stufen beinhaltet:
a) Herstellung von Granulaten mit kontrolliertem Porenvolumen aus einem Oxid oder Oxiden eines Metalls mit einer Korngröße kleiner als 10 µm, einem spätestens bei der carbothermischen Reduktion kohlenstofffreisetzenden Bindemittel und gegebenenfalls zusätzlichem Kohlenstoff.
b) Carbothermische Reduktion der aus a) gewonnenen Granulate, gegebenenfalls unter einer Stickstoff-Atmosphäre.
c) Kohlenstoffentfernung.
d) Gewinnung der Pulver.

7. Verfahren nach Anspruch 6, dadurch gekennzeichnet, daß das Oxid oder die Oxide des Metalls aus der Menge ausgewählt wird (werden), die durch SiO₂, Al₂O₃, TiO₂, ZrO₂, HfO₂ und B₂O₃ gebildet wird.

8. Verfahren nach Anspruch 6, dadurch gekennzeichnet, daß gleichzeitig Kohlenstoff und ein Bindemittel eingesetzt werden.

9. Verfahren nach Anspruch 8, dadurch gekennzeichnet, daß der Kohlenstoff aus der Menge ausgewählt wird, die durch pflanzlichen Kohlenstoff, thermischen Ruß, Acetylenruß, Koks, Ruß, Graphit gebildet wird.

10. Verfahren nach Anspruch 6, dadurch gekennzeichnet, daß nur ein kohlenstofffreisetzendes Bindemittel eingesetzt wird.

11. Verfahren nach irgendeinem der Ansprüche 6 bis 10, dadurch gekennzeichnet, daß das Bindemittel unter natürlichen oder synthetisierten Substanzen ausgewählt wird, sich unter den Reaktionsbedingungen der carbothermischen Reduktion in Kohlenstoff umwandelt und die Agglomeration der Oxide begünstigt.

12. Verfahren nach Anspruch 11, dadurch gekennzeichnet, daß das Bindemittel aus der Menge ausgewählt wird, die durch Steinkohlenteer, besonders thermohärtbare Harze oder Polymere, wie die Phenolharze, zum Beispiel Phenolformaldehyd, Epoxyharze, Polyimide, Polyharnstoffe, Polycarbonate, gebildet wird.

13. Verfahren nach irgendeinem der Ansprüche 6 bis 12, dadurch gekennzeichnet, daß das Bindemittel, gegebenenfalls nach Zugabe von Kohlenstoff, in einer solchen Menge eingesetzt wird, daß das Molverhältnis Kohlenstoff/Oxid größer als 1 ist und bevorzugt zwischen 2 und 60/1 liegt.

14. Verfahren nach irgendeinem der Ansprüche 8 und 9, dadurch gekennzeichnet, daß die Menge des Bindemittels mindestens 2 Gewichtsprozente der Mischung Oxid + Kohlenstoff beträgt.

15. Als spezifische Bestandteile zur Durchführung des Verfahrens nach Anspruch 6: ein Granulat, bestehend aus einer Mischung von Metalloxid(en), ein kohlenstofffreisetzendes Bindemittel und gegebenenfalls Kohlenstoff, wobei das genannte Granulat ein Porenvolumen zwischen 0,1 und 3 cm³/g besitzt.

16. Granulate nach Anspruch 15, dadurch gekennzeichnet, daß sie als Plättchen, Zylinder oder regelmäßig oder unregelmäßig geformte Partikel, deren größte Abmessung größer als 0,5 mm ist, vorliegen.

17. Granulate nach irgendeinem der Ansprüche 15 oder 16, dadurch gekennzeichnet, daß ihre größte Abmessung zwischen 1 und 30 mm liegt.

18. Anwendung der Pulver nach irgendeinem der Ansprüche 1 bis 5 zur Herstellung von Keramikmaterialien.
